(19) **Europäisches Patentamt European Patent Office Office européen des brevets**

(11) **EP 3 078 558 B1**

(12) **EUROPEAN PATENT SPECIFICATION**

(45) Date of publication and mention of the grant of the patent:
**01.08.2018  Bulletin 2018/31**

(51) Int Cl.:
***F16H 61/662*** *(2006.01)*    ***F16H 61/02*** *(2006.01)*
***F16H 63/50*** *(2006.01)*

(21) Application number: **15769053.8**

(22) Date of filing: **19.03.2015**

(86) International application number:
**PCT/JP2015/058369**

(87) International publication number:
**WO 2015/146808 (01.10.2015 Gazette 2015/39)**

(54) **AUTOMATIC TRANSMISSION CONTROL DEVICE**

AUTOMATIKGETRIEBESTEUERUNGSVORRICHTUNG

DISPOSITIF DE COMMANDE DE TRANSMISSION AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2014  JP 2014066409**

(43) Date of publication of application:
**12.10.2016  Bulletin 2016/41**

(73) Proprietor: **Aisin Aw Co., Ltd.**
**Anjo-shi, Aichi 444-1192 (JP)**

(72) Inventors:
• **NOZAKI,Masahiro**
**Anjo-shi**
**Aichi 444-1192 (JP)**
• **KIKKAWA,Akihiro**
**Anjo-shi**
**Aichi 444-1192 (JP)**
• **KURITA,Kiyoshi**
**Anjo-shi**
**Aichi 444-1192 (JP)**
• **TSUTSUI,Hiroshi**
**Anjo-shi**
**Aichi 444-1192 (JP)**

(74) Representative: **TBK**
**Bavariaring 4-6**
**80336 München (DE)**

(56) References cited:
**EP-A1- 3 061 996      JP-A- 2004 162 800**
**JP-A- 2005 132 329    JP-A- 2005 132 329**
**JP-A- 2007 327 574    JP-A- 2010 254 048**
**JP-A- 2012 026 363    JP-A- 2012 026 363**
**JP-A- 2015 051 742    JP-A- 2015 051 742**
**US-A1- 2009 326 778**

**Description**

Technical Field

The present invention relates to a control device for an automatic transmission provided with a continuously variable transmission mechanism continuously variable while drivably coupling, for example, a driving source to wheels and, more particularly, to a control device for an automatic transmission capable of outputting a torque reduction signal for reducing the driving torque of the driving source.

Background Art

For example, in a belt type continuously variable transmission (belt type CVT) used preferably for vehicles, there is a conventional control device that reduces the driving torque of an internal combustion engine (referred to below as an engine) to prevent occupants from feeling unnatural due to an inertial torque acting on the input shaft of the CVT during an upshift using manual shifting while pressing an accelerator pedal. In addition, in a CVT control device that performs such control, there is a technique for further significantly reducing the driving torque immediately after starting control of a transmission shift to prevent the occurrence of a shock when a change in the transmission shift ratio does not transitionally match the driving torque of an engine (see PTL 1). Another example is the apparatus in JP2012026363 which has an inertia torque calculation part calculating inertia torque negated when torque of a drive source using a maximum torque increase/decrease amount is increased/decreased. A variable speed setting part sets variable-speed of a stepless transmission that generates the inertia torque as upper limit variable-speed based on the inertia torque. A winding-type stepless transmission control unit changes control of the stepless transmission such that the upper limit variable-speed is not exceeded.

Citation List

Patent Literature

PTL 1: JP-A-2005-132329

Summary of Invention

Technical Problem

However, the control device for an automatic transmission described in PTL 1 can prevent occupants from feeling unnatural due to an inertial torque, but changes in the acceleration of a vehicle becomes gentle, so the driver sensibly obtains weak acceleration feeling. That is, since the driver selecting a manual shifting operation expects sporty feeling and sharp feeling caused by a transmission shift and desires sensible acceleration feeling accompanied with a transmission shift operation.
An object of the invention is to provide a control device for an automatic transmission capable of controlling the automatic transmission including a continuously variable transmission mechanism in which manual shifting can be selected so as to sensibly obtain acceleration feeling during an upshift while accelerating.

Solution to Problem

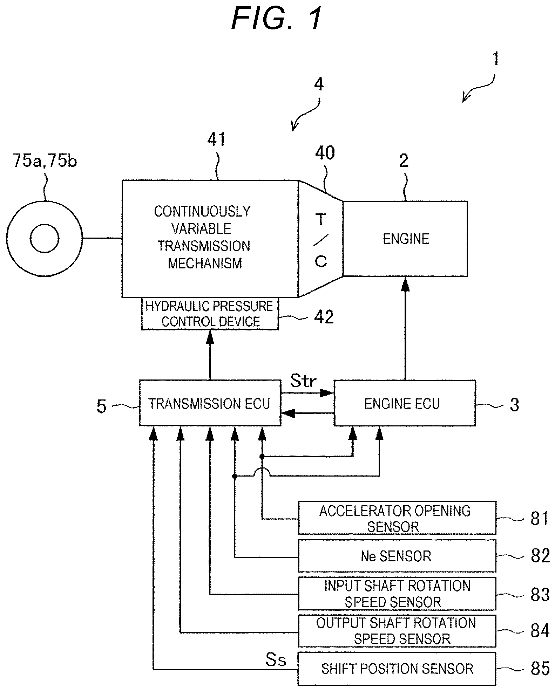

A control device (5) (see Figs. 1 to 4, for example) for an automatic transmission (4) according to the present disclosure is capable of executing a manual mode for performing a transmission shift in a stepwise manner on a continuously variable transmission mechanism (41) continuously variable while drivably coupling a driving source (2) to wheels (75a and 75b) by receiving a shift signal (Ss) and capable of outputting a torque reduction signal (Str) for reducing a driving torque of the driving source (2) during a transmission shift, in which, when the shift signal (Ss) for an upshift is input with an accelerator opening equal to or more than a threshold and a transmission shift is performed, the torque reduction signal (Str) for reducing the driving torque of the driving source (2) is output so that an inertial torque acting on an input shaft (41a) of the continuously variable transmission mechanism (41) is canceled while a transmission shift ratio is changed and, before the transmission shift ends, a vehicle driving force is reduced to a vehicle driving force after the transmission shift.
Reference numerals in parentheses are indicated for correspondence with the drawings and are used for convenience to facilitate the understanding, so they have no effects on the structure of the appended claims.

Advantageous Effects of Invention

In the control device for an automatic transmission, when (that is, during a power-on upshift) the shift signal for an upshift is input with the accelerator opening equal to or more than a threshold and a transmission shift is performed, the torque reduction signal is output to reduce the driving torque of the driving source, so that the inertial torque acting on the input shaft of the continuously variable transmission mechanism can be canceled and the vehicle driving force can be reduced to the vehicle driving force after the transmission shift before the transmission shift ends. This increases the change speed of the vehicle driving force as compared with the case in which the vehicle driving force is reduced gently until the transmission shift ends, so the driver feels an immediate change in acceleration and obtains high change responsivity, sporty feeling, sharp feeling, and sensible acceleration feeling.

Brief Description of Drawings

[FIG. 1] FIG. 1 is a block diagram illustrating a vehicle including an automatic transmission according to an embodiment.
[FIG. 2] FIG. 2 is a skeleton diagram illustrating the automatic transmission according to the embodiment.
[FIG. 3] FIG. 3 is a flowchart illustrating the operation of the automatic transmission according to the embodiment.
[FIG. 4] FIG. 4 is a time chart illustrating the operation of the automatic transmission according to the embodiment.

Description of Embodiments

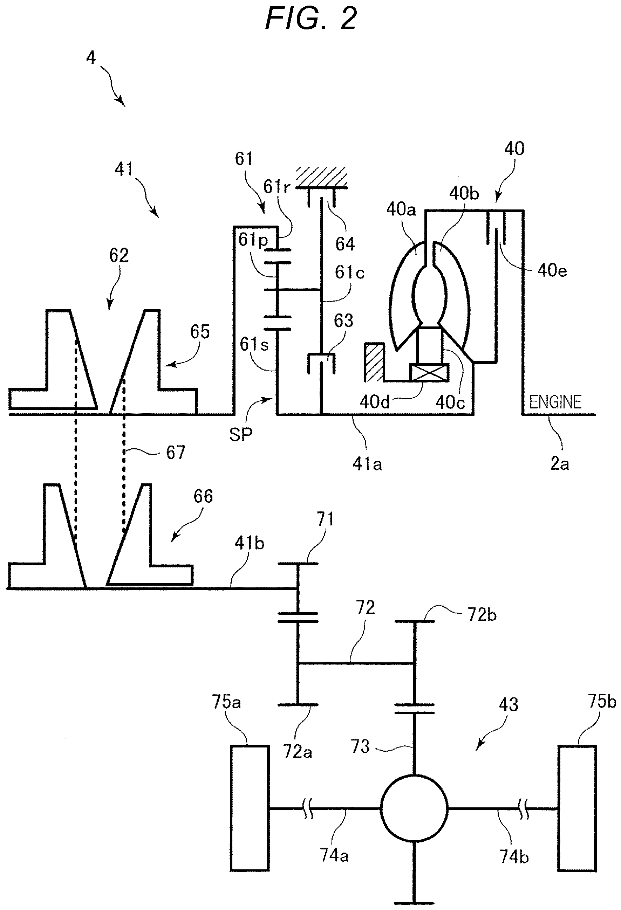

An automatic transmission according to an embodiment will be described with reference to Figs. 1 to 4.
First, the schematic structure of a vehicle 1 including the automatic transmission 4 will be described with reference to Figs. 1 and 2. As illustrated in Fig. 1, the vehicle 1 according to the embodiment is of, for example, FF (front engine front drive) type and includes an engine (driving source) 2, an engine ECU 3 controlling the engine 2, an automatic transmission 4, and a transmission ECU (control device) 5 controlling the automatic transmission 4.
The engine ECU 3 includes, for example, a CPU, a ROM storing processing programs, a RAM temporarily storing data, an input/output port, and a communication port and outputs various types of signals such as a driving signal to a throttle motor driving a throttle valve, a control signal to a fuel injection valve, and an ignition signal to an ignition plug, from the output port. An accelerator opening sensor 81 for detecting an accelerator opening Acc, an engine rotation speed sensor (Ne sensor) 82 for detecting a rotation speed Ne of a crankshaft 2a of the engine 2, and the like are connected to the engine ECU 3 via the input port.
The automatic transmission 4 includes a torque converter 40 connected to the engine 2, a continuously variable transmission mechanism 41 connected to a torque converter 40, and a hydraulic pressure control device 42 for controlling the hydraulic pressures of these components. Specifically, the automatic transmission 4 mainly includes the torque converter 40, the continuously variable transmission mechanism 41, and a differential device 43, as illustrated in Fig. 2. In addition, the continuously variable transmission mechanism 41 includes a forward/backward switching device 61 and a belt type variable transmission apparatus 62.
The torque converter 40 is disposed in a power transmission path between the crankshaft 2a of the engine 2 an input shaft 41a of the continuously variable transmission mechanism 41 and includes a pump impeller 40a coupled to the crankshaft 2a, a turbine runner 40b coupled to the input shaft 41a of the continuously variable transmission mechanism 41, a stator 40c restricted to one rotation direction via a one-way clutch 40d, and a lock-up clutch 40e that can perform (that is, can lock up input/output rotation) direct mechanical engagement between the pump impeller 40a and the turbine runner 40b. Accordingly, the rotation of the crankshaft 2a of the engine 2 is transferred to the input shaft 41a via a hydraulic flow passing through the pump impeller 40a, the turbine runner 40b, and the stator 40c or via mechanical coupling by the lock-up clutch 40e.
The forward/backward switching device 61 is disposed in series with the torque converter 40 in the power transmission path concentrically with the input shaft 41a and has a simple planetary gear SP. A sun gear 61s of the planetary gear SP is fixed to the input shaft 41a and a ring gear 61r is coupled to a primary pulley 65, which will be described later. In addition, the forward/backward switching device 61 includes a forward clutch 63 disposed between a carrier 61c supporting a pinion 61p and the input shaft 41a and a backward brake 64 to which the carrier 61c is coupled. Accordingly, the forward clutch 63 and the backward brake 64 are disposed in series with the torque converter 40 in the power transmission path. Therefore, in the state in which the forward clutch 63 is engaged, the input rotation of the input shaft 41a is input to the sun gear 61s and the carrier 61c and the input rotation is transferred from a ring gear 61r to the primary pulley 65 with the planetary gear SP directly coupled and rotating integrally. In addition, in the state in which the backward brake 64 is engaged, the input rotation of the input shaft 41a is input to the sun gear 61s, the rotation of the carrier 61c is fixed, and the reverse rotation reversed via the carrier 61c is transferred to the primary pulley 65 close to the ring gear 61r.

The belt type continuously variable transmission apparatus 62 includes the primary pulley 65, a secondary pulley 66, and a belt (including any endless belts such as, for example, a metal push type belt, a metal pull type belt, and a metal ring) 67 wound around both belts. As a result of controlling movable pulleys of the primary pulley 65 and the secondary pulley 66 by adjusting their hydraulic pressures, when the holding radius (rotary radius) of the belt 67 of the primary pulley 65 is increased and the holding radius of the belt 67 of the secondary pulley 66 is reduced, a continuous transmission shift is performed so as to increase the transmission shift ratio (downshift). In contrast, when the holding radius of the belt 67 of the primary pulley 65 is reduced and the holding radius of the belt 67 of the secondary pulley 66 is increased, a continuous transmission shift is performed so as to reduce the transmission shift ratio (upshift).

An output gear 71 coupled to the secondary pulley 66 through an output shaft 41b is engaged with a gear 72a at one end of a counter shaft 72 and a gear 72b at the other end of the counter shaft 72 is engaged with a ring gear 73 of the differential device 43. Accordingly, the output rotation continuously changed by the continuously variable transmission mechanism 41 is transferred to the differential device 43 via the counter shaft 72 and output to wheels 75a and 75b connected to left and right driving shafts 74a and 74b while the differential device 43 absorbs the rotation difference between left and right driving shafts 74a and 74b. Accordingly, the continuously variable transmission mechanism 41 is continuously variable while drivably coupling the engine 2 to the wheels 75a and 75b.

The hydraulic pressure control device 42 has an oil pump (not illustrated) driven in sync with the rotation of the engine 2 and a hydraulic pressure generated by the oil pump is adjusted by a primary regulator valve (not illustrated) and a secondary regulator valve (not illustrated) to a line pressure and a secondary pressure based on the throttle opening. In addition, the hydraulic pressure control device 42 has a plurality of solenoid valves (not illustrated) and controls the transmission shift of the belt type continuously variable transmission apparatus 62 and the engagement of the forward/backward switching device 61 and the lock-up clutch 40e using a hydraulic pressure or the like according to an instruction from the transmission ECU 5.

The transmission ECU 5 includes, for example, a CPU, a ROM storing processing programs, a RAM temporarily storing data, input/output ports, and a communication port and outputs various types of signals such as a control signal (for the hydraulic pressure control device 42) and the torque reduction signal Str (for the engine ECU 3) from the output port. The accelerator opening sensor 81, the engine rotation speed sensor 82, an input shaft rotation speed sensor 83 for detecting an input shaft rotation speed Nin of the input shaft 41a, an output shaft rotation speed sensor 84 for detecting an output shaft rotation speed Nout of the output shaft 41b, a shift position sensor 85 for detecting the position of a shift lever as the shift signal Ss, and the like are connected to the transmission ECU 5 via the input port. In addition, the transmission ECU 5 and the engine ECU 3 are connected to each other via the communication port so that control signals, data, and the like can be exchanged therebetween.

In addition, the transmission ECU 5 can execute, on the continuously variable transmission mechanism 41, the manual mode for performing a transmission shift in a stepwise manner by receiving the shift signal Ss from the shift position sensor 85. In addition, the transmission ECU 5 can output, to the engine ECU 3, the torque reduction signal Str for reducing the driving torque of the engine 2 during a transmission shift. Known appropriate methods can be applied to the control in which the transmission ECU 5 makes the continuously variable transmission mechanism 41 execute the manual mode and the control in which the transmission ECU 5 outputs the torque reduction signal Str and the engine ECU 3 reduces the driving torque of the engine 2, so detailed descriptions are omitted.

In addition, when the transmission ECU 5 receives the shift signal Ss of upshift with the accelerator opening Acc equal to or more than a threshold and performs a transmission, the transmission ECU 5 outputs the torque reduction signal Str for reducing the driving torque of the engine 2 so as to cancel the inertial torque acting on the input shaft 41a of the continuously variable transmission mechanism 41 while the transmission shift ratio changes and, before the transmission shift ends, reduce the vehicle driving force to the vehicle driving force after the transmission shift.

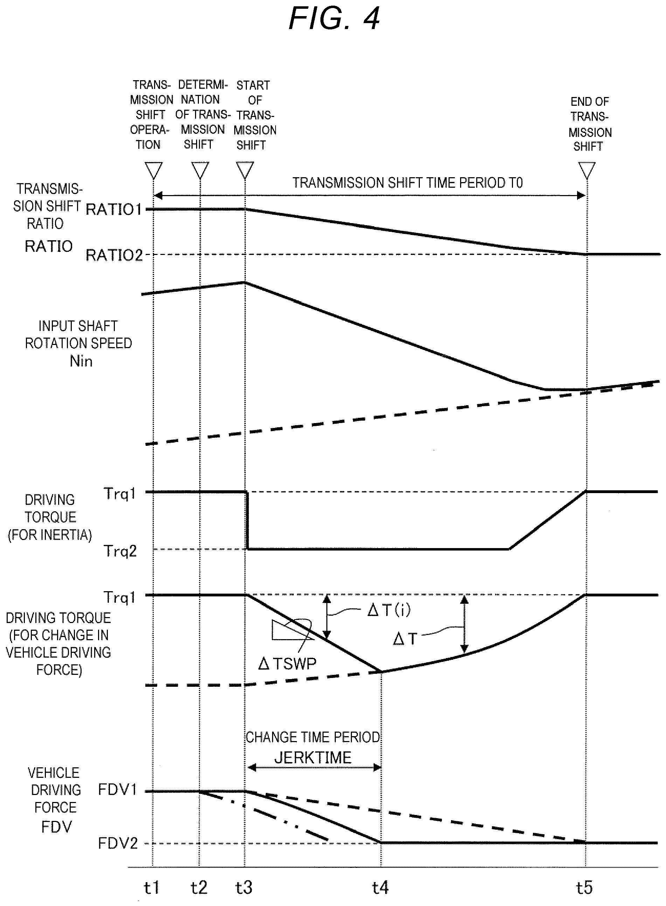

The following details the calculation method in the transmission ECU 5 when reducing the driving torque of the engine 2 so as to cancel the inertial torque acting on the input shaft 41a of the continuously variable transmission mechanism 41 and, before the transmission shift ends, reduce the vehicle driving force to the vehicle driving force (target vehicle driving force) after the transmission shift, with reference to Fig. 4.

As illustrated in Fig. 4, a transmission shift time period T0 is the period from a time t1 at which an operation for changing a current transmission shift ratio RATIO is performed to an end time t5 at which a transmission shift ratio RATIO 1 before the transmission shift becomes a transmission shift ratio RATIO2 after the transmission shift and the transmission ends. The transmission ECU 5 calculates a target driving torque Trq2 to which the driving torque of the engine 2 is reduced from a driving torque Trq1 before the transmission shift so as to cancel the inertial torque acting on the input shaft 41a of the continuously variable transmission mechanism 41 from a start time t3 at which the transmission shift ratio RATIO 1 before the transmission shift actually starts changing until the transmission shift end time t5 (FOR INERTIA in the drawing). Since this target driving torque Trq2 can be calculated by a method similar to a conventional method on the basis of the engine rotation speed Ne, the transmission shift ratio RATIO, a vehicle speed V, and the like, the detailed description of the calculation method is omitted. When the transmission ECU 5 reduces the driving torque of the engine 2 from the current driving torque Trq1 to the target driving torque Trq2, a vehicle driving force FDV decreases along the gentle downward straight line shown by the dashed line in the drawing when the vehicle driving force FDV changes from a vehicle driving force FDV1 before the transmission shift to a target vehicle driving force FDV2 after the transmission shift. The target vehicle driving force FDV2 is preset or can be calculated based on the current running state.

Next, when the downslope of the vehicle driving force FDV is made steep to achieve a rapid change and obtain acceleration feeling, the driving torque is reduced in consideration of the torque corresponding to the change in the acceleration in addition to the torque corresponding to the inertia described above (FOR CHANGE IN VEHICLE DRIVING FORCE in the drawing). Since the acceleration is calculated by dividing the force by the mass, if the mass of the running vehicle 1 does not change, the achievement of the target acceleration means the achievement of the target vehicle driving force FDV2.

Therefore, first, a change time period JERKTIME for reducing the vehicle driving force FDV from the vehicle driving force FDV1 before the transmission shift to the target vehicle driving force FDV2 after the transmission shift is set. Since the acceleration feeling depends on this change time period JERKTIME, the change time period JERKTIME can be set as appropriate to adjust the acceleration feeling.

The change time period JERKTIME is normally set to a value equal to or less than the half of the transmission shift time period T0. The reason is that, when, for example, an automatic transmission having a stepped transmission mechanism performs a transmission shift, there are a torque phase for changing the engagement of the clutch and brake and an inertia phase subsequent to the torque phase, since the vehicle driving force FDV is reduced in the torque phase and similarity to the change time period JERKTIME is assumed, the acceleration feeling similar to that of the stepped transmission mechanism can be obtained by setting the change time period JERKTIME to the half of the transmission shift time period T0 as in the torque phase.

In addition, the change time period JERKTIME is not limited to the half of the transmission shift time T0 or less and may be any period as long as the change time period JERKTIME is before the end of the transmission shift. In addition, the change time period JERKTIME may be changed according to, for example, the input shaft rotation speed Nin or the vehicle speed V. For example, in the embodiment, the change time JERKTIME is short as the input shaft rotation speed Nin is high or the vehicle speed V is low and the change time JERKTIME is long as the input shaft rotation speed Nin is low or the vehicle speed V is high.

First, a method for calculating a driving torque reduction amount ∆T from a time t4 at which the change time period JERKTIME elapses to the time t5 at which the transmission shift ends will be described. The vehicle driving force FDV is defined by an expression 1.

[Math 1]

$$FDV = \{(TIN - TRQITIN) \times E \times RATIO - TRQITOUT\}$$
$$\times RED \times DIFF / TIR - FRIC$$

FDV: Vehicle driving force (N)
TIN: Driving torque (Nm)
TRQITIN: Inertial torque of input shaft 41a (Nm)
TRQITOUT: Inertial torque of output shaft 41b (Nm)
E: Transfer efficiency of continuously variable transmission mechanism 41
RATIO: Current transmission shift ratio
RED: Gear ratio of gears 72a and 72b of counter shaft 72
DIFF: Gear ratio of differential device 43
TIR: Tire radius (m)
FRIC: Travel resistance (N)

Since the target vehicle driving force FDV2 is the vehicle driving force FDV generated by the transmission shift ratio (target transmission shift ratio) RATIO2 after the transmission shift, the relationship of an expression 2 is met.

[Math 2]

$$FDV2 = \{(TRQDRVRQ - TRQITIN) \times E \times RATIO2 - TRQITOUT\}$$
$$\times RED \times DIFF / TIR - FRIC$$

FDV2: Target vehicle driving force (N)
TRQDRVRQ: Driver requested torque (Nm)
RATIO2: Target transmission shift ratio

The driver requested torque TRQDRVRQ is a value to be set based on the accelerator opening Acc and obtained from the engine ECU 3. In addition, in the driving torque term, the driver requested torque TRQDRVRQ is used instead of the actual driving torque TIN. The reason why the driver requested torque TRQDRVRQ is used to obtain a more stable value is that, although the regular calculation of the inertial torque TRQITIN of the input shaft 41a during a transmission shift is enabled based on the change ratio of the rotation speed detected by a rotation sensor, the calculation of an accurate value may become difficult due to noise during detection of a pulse or a difference from the actual inertial torque may be caused by primary delay or the like even in a calculation method using a moving average as a measure against noise. Therefore, if such a problem with the measurement accuracy is solved, the driving torque TIN may be used as in the expression 1 instead of the driver requested torque TRQDRVRQ in the driving torque term.

When the requested driving torque reduction amount required to achieve the target vehicle driving force FDV2 at the current transmission shift ratio RATIO is assumed to be $\Delta T$, an expression 3 is obtained based on the expression 2.

[Math 3]

$$FDV2 = \{(TRQDRVRQ + \triangle T - TRQITIN) \times E \times RATIO - TRQITOUT\}$$
$$\times RED \times DIFF / TIR - FRIC$$

$\Delta T$: Driving torque reduction amount (Nm) for achieving target vehicle driving force FDV2

The inertial torque TRQITOUT of the output shaft 41b, the travel resistance FRIC, and a transfer efficiency E of the continuously variable transmission mechanism 41 are substantially unchanged before and after a transmission shift. In addition, the inertial torque TRQITIN of the input shaft 41a during a transmission shift is canceled to 0 since the driving torque is reduced by the same amount as the inertial torque as described above. In addition, the inertial torque TRQITIN of the input shaft 41a after the transmission shift is substantially 0 since there is no immediate rotation change upon completion of the step transmission shift.

An expression 4 is obtained by combining the expression 2 with expression 3 in consideration of these conditions.

[Math 4]

$$TRQDRVRQ \times RATIO2 = (TRQDRVRQ + \triangle T) \times RATIO$$

An expression 5 is obtained by converting the expression 4 with respect to $\Delta T$.

[Math 5]

$$\triangle T = TRQDRVRQ \times RATIO2 / RATIO - TRQDRVRQ$$
$$= TRQDRVRQ \times (RATIO2 / RATIO - 1)$$

Therefore, as illustrated in Fig. 4, the driving torque reduction amount $\Delta T$ from the time t4 at which the change time period JERKTIME elapses to the time t5 at which the transmission shift ends can be obtained by the expression 5.

Next, a calculation method for a driving torque reduction amount $\Delta T(i)$ from the time t3 at which the transmission shift starts to the time t4 at which the change time period JERKTIME elapses will be described. As illustrated in Fig. 4, since the driving torque is linearly reduced from the driving torque Trq1 before being changed, the downslope needs to be obtained. Therefore, as indicated in an expression 6, a driving torque gradual change amount ΔTSWP for achieving the target vehicle driving force FDV2 is defined as the downslope.

[Math 6]

$$\triangle TSWP = \triangle T \: / \: JERKTIME$$

ΔTSWP: Driving torque gradual change amount (Nm/sec) for achieving the target vehicle driving force FDV2

In addition, it is possible to obtain the driving torque reduction amount ΔT(i) at some point from an expression 7 by accumulating the driving torque gradual change amount ΔTSWP based on an elapsed time i from the time t3 at which the transmission shift starts.

[Math 7]

$$\triangle T(i) = \triangle T(i\text{-}1) + \triangle TSWP$$

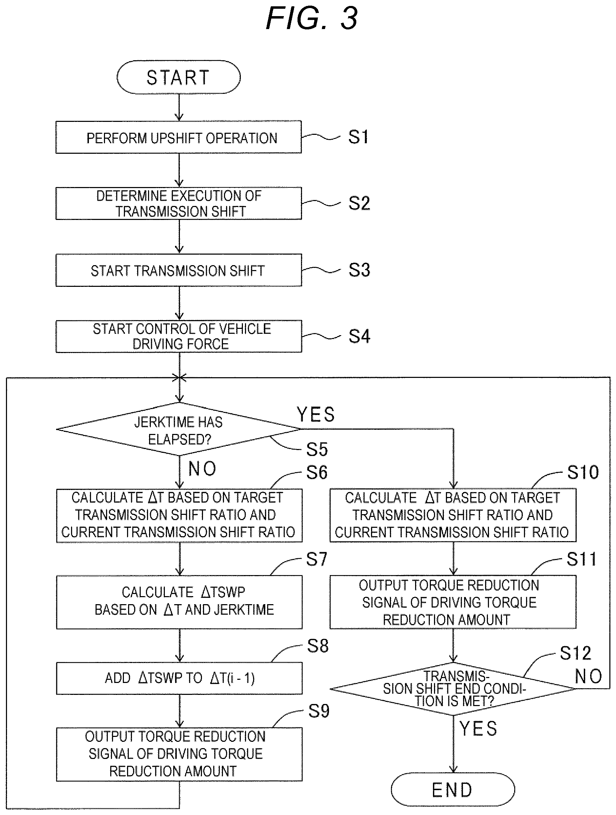

The operation of the automatic transmission 4 above will be described with reference to the flowchart in Fig. 3 and the time chart in Fig. 4.

While the vehicle 1 runs, the driver selects the manual mode, presses the accelerator pedal by a predetermined amount or more to perform acceleration, and performs an upshift by operating, for example, the shift lever (step S1, t1 in Fig. 4). This causes the transmission ECU 5 to determine whether to start the transmission shift in consideration of the accelerator opening Acc obtained from the accelerator opening sensor 81, the shift signal Ss from the shift position sensor 85, the input shaft rotation speed Nin obtained from the input shaft rotation speed sensor 83, the output shaft rotation speed Nout obtained from the output shaft rotation speed sensor 84, the vehicle speed V calculated from it, and the like (step S2).

When the transmission ECU 5 determines the start of a transmission shift (t2 in Fig. 4), the continuously variable transmission mechanism 41 starts transmission shift operation (step S3, t3 in Fig. 4). Consequently, the transmission ECU 5 starts controlling the vehicle driving force FDV (step S4, t3 in Fig. 4). The transmission ECU 5 generates and outputs the torque reduction signal Str for reducing the driving torque of the engine 2 so as to cancel the inertial torque acting on the input shaft 41a of the continuously variable transmission mechanism 41 and reduce the vehicle driving force FDV to the target vehicle driving force FDV2 before the transmission shift ends. At this time, as illustrated in Fig. 4, the driving torque for reducing the torque corresponding to the inertia and the change amount of the vehicle driving force for acceleration feeling are separately calculated and then these amounts are added to generate and output the single torque reduction signal Str. In the embodiment, the torque reduction amount, which indicates the driving torque reduced to cancel the torque corresponding to the inertia, is the same as in the related art and will not be described.

The transmission ECU 5 determines whether the elapsed time from the time t3 at which the transmission shift starts has reached the change time period JERKTIME (step S5). When the transmission ECU 5 determines that the elapsed time from the time t3 at which the transmission shift starts has not reached the change time period JERKTIME (from t3 to t4 in Fig. 4), the transmission ECU 5 calculates the driving torque reduction amount ΔT for achieving the target vehicle driving force FDV2 from the expression 5 using the driver requested torque TRQDRVRQ based on the target transmission shift ratio RATIO2 and the current transmission shift ratio RATIO (step S6, ΔT in Fig. 4). Then, the transmission ECU 5 calculates the driving torque gradual change amount ΔTSWP for achieving the target vehicle driving force FDV2 from the expression 6 based on the driving torque reduction amount ΔT and the change time period JERKTIME (step S7, ΔTSWP in Fig. 4). In addition, the transmission ECU 5 calculates the current driving torque reduction amount ΔT(i) from the expression 7 by adding the driving torque gradual change amount ΔTSWP to the previous driving torque reduction amount ΔT(i-1) (step S8, ΔT(i) in Fig. 4).

The transmission ECU 5 adds the driving torque reduction amount for canceling the inertia to the calculated current driving torque reduction amount ΔT(i), calculates the total driving torque reduction amount, generates the torque reduction signal Str for achieving the total driving torque reduction amount, and outputs the torque reduction signal Str to the engine ECU 3 (step S9). The engine ECU 3 receives the torque reduction signal Str and performs reduction processing for temporarily reducing the driving torque on the engine 2. As the reduction processing, it is possible to apply a known method such as, for example, the adjustment of ignition timing or the adjustment of a fuel injection amount as appropriate according to the driving torque reduction amount. Then, the transmission ECU 5 determines again whether the elapsed time from the time t3 at which the transmission shift starts has reached the change time period JERKTIME (step S5).

This reduces the vehicle driving force FDV linearly from the vehicle driving force FDV1 before the transmission shift, from the time t3 at which the transmission shift starts to the time t4 at which the change time period JERKTIME elapses and the vehicle driving force FDV reaches the target vehicle driving force FDV2 at the time t4 (from t3 to t4 in Fig. 4). Since the change time period JERKTIME is equal to or less than the half of the transmission shift time period T0, the vehicle driving force FDV reaches the target vehicle driving force FDV2 before a lapse of the half of the transmission shift time period T0 from the time t1 at which a transmission shift operation is performed to the time t5 at which the transmission shift ends.

In the embodiment, the change time period JERKTIME is short as the input shaft rotation speed Nin is high or the vehicle speed V is low and the change time period JERKTIME is long as the input shaft rotation speed Nin is low or the vehicle speed V is high. Therefore, the downslope ΔTSWP of the torque reduction signal Str is steep as the input shaft rotation speed Nin is high or the vehicle speed V is low and the downslope ΔTSWP of the torque reduction signal Str is gentle as the input shaft rotation speed Nin is low or the vehicle speed V is high. Therefore, when the input shaft rotation speed Nin is high and the vehicle speed V is low, since the driver often expects strong acceleration feeling, strong acceleration feeling can be achieved by making the downslope ΔTSWP steep. When the input shaft rotation speed Nin is low and the vehicle speed V is high, since the driver does not often expect strong acceleration feeling, weak acceleration feeling can be achieved by making the downslope ΔTSWP gentle.

In step S5, when the transmission ECU 5 determines that the elapsed time from the time t3 at which the transmission shift starts has reached the change time period JERKTIME (t4 to t5 in Fig. 4), the transmission ECU 5 calculates the driving torque reduction amount ΔT for achieving the target vehicle driving force FDV2 from the expression 5 using the driver requested torque TRQDRVRQ based on the target transmission shift ratio RATIO2 and the current transmission shift ratio RATIO (step S10, ΔT in Fig. 4). Then, the transmission ECU 5 calculates the total driving torque reduction amount by adding the driving torque reduction amount for canceling the inertia to the calculated current driving torque reduction amount ΔT, generates the torque reduction signal Str for achieving the total reduction amount, and outputs the generated torque reduction signal Str to the engine ECU 3 (step S11). In addition, the transmission ECU 5 determines whether the condition for ending the transmission shift is met (step S12). When determining that the condition for ending the transmission shift is not met, the transmission ECU 5 determines whether the elapsed time from the time t3 at which the transmission shift starts has reached the change time period JERKTIME (step S5). When determining that the condition for ending the transmission shift is met, the transmission ECU 5 ends the processing.

Therefore, from the time t4 at which the change time period JERKTIME elapses to the time t5 at which the transmission shift ends, the vehicle driving force FDV is maintained at the target vehicle driving force FDV2 (from t4 to t5 in Fig. 4). Accordingly, from the time t3 at which the transmission shift starts to the time t4 at which the change time period JERKTIME elapses, the downslope of the vehicle driving force FDV becomes steeper than in the case (the dashed line in Fig. 4) in which the driving torque is not reduced to obtain acceleration feeling. Until the time t5 at which the transmission shift ends, since the vehicle driving force FDV is maintained at the target vehicle driving force FDV2, the driver receives rapid acceleration and obtains acceleration feeling during the change time period JERKTIME.

As described above, in the control device 5 of the automatic transmission 4 according to the embodiment, when (that is, during a power-on upshift) the shift signal Ss for an upshift is input with the accelerator opening Acc equal to or more than a threshold and a transmission shift is performed, the torque reduction signal Str is output to reduce the driving torque of the engine 2, so that the inertial torque acting on the input shaft 41a of the continuously variable transmission mechanism 41 can be canceled and the vehicle driving force FDV can be reduced to the target vehicle driving force FDV2 before the transmission shift ends. This increases the change speed of the vehicle driving force FDV as compared with the case in which the vehicle driving force FDV is reduced gently until the transmission shift ends, so the driver feels an immediate change in acceleration and obtains high change responsivity, sporty feeling, sharp feeling, and acceleration feeling sensibly.

In the control device 5 for the automatic transmission 4 according to the embodiment, the vehicle driving force FDV reaches the target vehicle driving force FDV2 before a lapse of the half of the transmission shift time period T0 from the time t1 at which a transmission shift operation is performed to the time t5 at which the transmission shift ends.

Therefore, in the control device 5 for the automatic transmission 4 according to the embodiment, acceleration feeling similar to, for example, a stepped transmission mechanism is achieved and the driver can sensibly obtain more acceleration feeling.

In addition, in the control device 5 for the automatic transmission 4 according to the embodiment, the torque reduction signal Str from when the vehicle driving force FDV is reduced to the target vehicle driving force FDV2 to when the transmission shift ends is obtained by adding a torque reduction amount for canceling the inertial torque acting on the input shaft 41a of the continuously variable transmission mechanism 41 to a torque reduction amount set so as to maintain the vehicle driving force FDV at the target vehicle driving force FDV2 based on the target transmission shift ratio RATIO2 of the continuously variable transmission mechanism 41 and the current transmission shift ratio RATIO.

Therefore, in the control device 5 of the automatic transmission 4 according to the embodiment, the torque reduction signal Str includes the torque reduction amount for canceling the inertial torque, so the inertial torque can be removed from the vehicle driving force FDV. In addition, the torque reduction signal Str includes the torque reduction amount for maintaining the vehicle driving force FDV at the target vehicle driving force FDV2, so the vehicle driving force FDV having been reduced to the target vehicle driving force FDV2 can remain unchanged.

In addition, in the control device 5 for the automatic transmission 4 according to the embodiment, the torque reduction signal Str when the vehicle driving force FDV is reduced to the target vehicle driving force FDV2 is obtained by adding the torque reduction amount for canceling the inertial torque acting on the input shaft 41a of the continuously variable transmission mechanism 41 to the torque reduction amount of the downslope $\Delta$TSWP set based on the input shaft rotation speed Nin of the continuously variable transmission mechanism 41 and the vehicle speed V.

Therefore, in the control device 5 of the automatic transmission 4 according to the embodiment, the torque reduction signal Str includes the torque reduction amount for canceling the inertial torque, so the inertial torque can be removed from the vehicle driving force FDV. In addition, since the torque reduction amount of the downslope $\Delta$TSWP is calculated as a function of the current transmission shift ratio RATIO, which is correlated with the input shaft rotation speed Nin and the vehicle speed V, and the target transmission shift ratio RATIO2, the control itself can be performed easily. In addition, the input shaft rotation speed Nin and the vehicle speed V are actually measured values for calculating the torque reduction amount of the downslope $\Delta$TSWP.

In addition, in the control device 5 of the automatic transmission 4 according to the embodiment, the downslope $\Delta$TSWP of the torque reduction signal Str is steep as the input shaft rotation speed Nin is high or the vehicle speed V is low and the downslope $\Delta$TSWP of the torque reduction signal Str is gentle as the input shaft rotation speed Nin is low or the vehicle speed V is high.

Therefore, in the control device 5 for the automatic transmission 4 according to the embodiment, when the input shaft rotation speed Nin is high, the vehicle speed V is low, and the driver often expects strong acceleration feeling by selecting a low transmission shift stage, then strong acceleration feeling can be achieved by making the downslope $\Delta$TSWP steep. When the input shaft rotation speed Nin is low, the vehicle speed V is high, and the driver does not often expect strong acceleration feeling by selecting a high transmission shift stage, then weak acceleration feeling can be achieved by making the downslope $\Delta$TSWP gentle. As described above, since the vehicle driving force FDV can be changed according to the running state, the acceleration feeling of the driver can be made more natural. By using only the transmission shift stage instead of the input shaft rotation speed Nin and the vehicle speed, the downslope $\Delta$TSWP may be made steep when the transmission shift stage is low or the downslope $\Delta$TSWP may be made gentle when the transmission shift stage is high. In addition, to make acceleration feeling during an upshift uniform without using transmission shift stage, the downslope $\Delta$TSWP may be made steep as the input shaft rotation speed Nin and the vehicle speed V are low or the downslope $\Delta$TSWP may be made gentle as the input shaft rotation speed Nin and the vehicle speed V are high.

In addition, in the control device 5 for the automatic transmission 4 according to the embodiment, the downslope $\Delta$TSWP of the torque reduction signal Str is calculated based on the current transmission shift ratio RATIO, the target transmission shift ratio RATIO2, the driver requested torque TRQDRVRQ based on the accelerator opening Acc, and the change time period JERKTIME required to reduce the vehicle driving force FDV to the target vehicle driving force FDV2 (see the expressions 5 and 6).

Therefore, in the control device 5 for the automatic transmission 4 according to the embodiment, since the driver requested torque TRQDRVRQ is used as the driving torque, more accurate control is achieved by eliminating the effect of noise during measurement of the inertial torque TRQITIN as compared with the case in which the actual driving torque TIN is used.

Although reduction in the vehicle driving force FDV for obtaining acceleration feeling starts at the time t3 at which the transmission shift starts in the above embodiment, the invention is not limited to the embodiment. Reduction in the vehicle driving force FDV for obtaining acceleration feeling may start at anytime from the time t1 at which the transmission shift operation is performed to the time t5 at which the transmission shift ends. For example, when reduction in the vehicle driving force FDV for obtaining acceleration feeling starts at the time t2, since the driver has performed the upshift operation even though the transmission shift does not start actually, the driver can obtain acceleration feeling immediately after the upshift operation and the acceleration feeling may become more comfortable.

In addition, although an internal combustion engine is used as the driving source in the embodiment, the invention is not limited to the embodiment and an electric motor may be used instead of an internal combustion engine in the case of, for example, an electric vehicle or hybrid vehicle provided with an electric motor. In the case of, for example, a hybrid vehicle provided with both an internal combustion engine and an electric motor, the torque reduction amount for canceling the inertial torque may be covered by reduction in the driving torque of the engine and the torque reduction amount for obtaining acceleration feeling may be covered by reduction in the driving torque of the motor.

In addition, although the continuously variable transmission apparatus 62 is installed as the continuously variable transmission mechanism 41 in the above embodiment, the invention is not limited to the embodiment and other types of continuously variable transmission mechanisms are applicable.

Industrial Applicability

The control device for the automatic transmission relates to a control device for an automatic transmission provided with a continuously variable transmission mechanism continuously variable while drivably coupling, for example, a driving source to wheels and the control device for the automatic transmission is preferably applicable, more particularly, to a control device for an automatic transmission capable of outputting a torque reduction signal for reducing the driving torque of the driving source.

Reference Signs List

2: engine (driving source)
4: automatic transmission
5: transmission ECU (control device)
41: continuously variable transmission mechanism
41a: input shaft
75a and 75b: wheels
FDV: vehicle driving force
FDV2: target vehicle driving force (vehicle driving force after transmission shift)
JERKTIME: change time period (time period for reducing the vehicle driving force to the vehicle driving force after transmission shift)
Ss: shift signal
Str: torque reduction signal

**Claims**

1.   A control device (5) for an automatic transmission capable of executing a manual mode for performing a transmission shift in a stepwise manner on a continuously variable transmission mechanism (41) continuously variable while drivably coupling a driving source (2) to a wheel (75a, 75b) by receiving a shift signal (Ss) and capable of outputting a torque reduction signal (Str) for reducing a driving torque of the driving source (2) during a transmission shift, wherein, when the shift signal (Ss) for an upshift is input with an accelerator opening equal to or more than a threshold and a transmission shift is performed, the torque reduction signal (Str) for reducing the driving torque of the driving source (2) is output so that an inertial torque acting on an input shaft of the continuously variable transmission mechanism (41) is canceled while a transmission shift ratio is changed and **characterized in that** before the transmission shift ends, a vehicle driving force is reduced to a vehicle driving force after the transmission shift.

2.   The control device (5) for an automatic transmission according to claim 1, wherein the torque reduction signal (Str) from when the vehicle driving force is reduced to the vehicle driving force after the transmission shift to when the transmission shift ends is obtained by adding a torque reduction amount for canceling the inertial torque acting on the input shaft of the continuously variable transmission mechanism (41) to a torque reduction amount set so as to maintain the vehicle driving force at the vehicle driving force after the transmission shift based on a target transmission shift ratio of the variable transmission mechanism and a current transmission shift ratio.

3.   The control device (5) for an automatic transmission according to claim 1 or 2, wherein the torque reduction signal (Str) when the vehicle driving force is reduced to the vehicle driving force after the transmission shift is obtained by adding the torque reduction amount for canceling the inertial torque acting on the input shaft (41a) of the continuously variable transmission mechanism (41) to a torque reduction amount of a downslope set based on an input shaft rotation speed of the continuously variable transmission mechanism (41) and a vehicle speed (V).

4.   The control device (5) for an automatic transmission according to claim 3, wherein the downslope of the torque reduction signal (Str) is steep as the input shaft rotation speed (Nin) is high or the vehicle speed (V) is low and the downslope of the torque reduction signal (Str) is gentle as the input shaft rotation speed (Nin) is low or the vehicle speed (V) is high.

5.   The control device (5) for an automatic transmission according to claim 3 or 4, wherein the downslope of the torque reduction signal (Str) is calculated based on the current transmission shift ratio, the target transmission shift ratio after the transmission shift, a driver requested torque based on the accelerator opening, and a time required to reduce the vehicle driving force to the vehicle driving force after the transmission shift.

**6.** The control device (5) for an automatic transmission according to any one of claims 1 to 5, wherein the vehicle driving force reaches the vehicle driving force after the transmission shift before a lapse of half of a time after a transmission shift operation is started until the transmission shift ends.


**Patentansprüche**

**1.** Steuervorrichtung (5) für ein Automatikgetriebe, die in der Lage ist, einen manuellen Modus auszuführen, um eine stufenweise Getriebeschaltung an einem stufenlos verstellbaren Getriebemechanismus (41) durchzuführen, der stufenlos verstellbar ist, während er eine Antriebsquelle (2) antreibend mit einem Rad (75a, 75b) koppelt, indem ein Schaltsignal (Ss) empfangen wird, und die in der Lage ist, ein Drehmomentreduzierungssignal (Str) auszugeben, um ein Antriebsdrehmoment der Antriebsquelle (2) während einer Getriebeschaltung zu reduzieren, wobei, wenn das Schaltsignal (Ss) für eine Hochschaltung bei einer Beschleunigeröffnung, die gleich oder größer als ein Schwellenwert ist, eingegeben wird und eine Getriebeschaltung durchgeführt wird, das Drehmomentreduzierungssignal (Str) zur Reduzierung des Antriebsdrehmoments der Antriebsquelle (2) ausgegeben wird, so dass ein auf eine Eingangswelle des stufenlos verstellbaren Getriebemechanismus (41) wirkendes Trägheitsdrehmoment ausgeglichen wird, während ein Getriebeschaltverhältnis geändert wird, und **dadurch gekennzeichnet, dass**, bevor die Getriebeschaltung endet, eine Fahrzeugantriebskraft auf eine Fahrzeugantriebskraft nach der Getriebeschaltung reduziert wird.

**2.** Steuervorrichtung (5) für ein Automatikgetriebe nach Anspruch 1, wobei das Drehmomentreduzierungssignal (Str), von der Reduzierung der Fahrzeugantriebskraft auf die Fahrzeugantriebskraft nach der Getriebeschaltung bis zum Ende der Getriebeschaltung, erhalten wird, indem ein Drehmomentreduzierungsbetrag zum Ausgleich des auf die Eingangswelle des stufenlos verstellbaren Getriebemechanismus (41) wirkenden Trägheitsdrehmoments zu einem Drehmomentreduzierungsbetrag addiert wird, der so eingestellt ist, dass die Fahrzeugantriebskraft auf der Fahrzeugantriebskraft nach der Getriebeschaltung gehalten wird, die auf einem Soll-Getriebeschaltverhältnis des verstellbaren Getriebemechanismus und einem gegenwärtigen Getriebeschaltverhältnis basiert.

**3.** Steuervorrichtung (5) für ein Automatikgetriebe nach Anspruch 1 oder 2, wobei das Drehmomentreduzierungssignal (Str), wenn die Fahrzeugantriebskraft auf die Fahrzeugantriebskraft nach der Getriebeschaltung reduziert wird, erhalten wird, indem der Drehmomentreduzierungsbetrag zum Ausgleich des auf die Eingangswelle (41a) des stufenlos verstellbaren Getriebemechanismus (41) wirkenden Trägheitsdrehmoments zu einem Drehmomentreduzierungsbetrag einer Absenkung hinzuaddiert wird, die auf der Eingangswellendrehzahl des stufenlos verstellbaren Getriebemechanismus (41) und einer Fahrzeuggeschwindigkeit (V) basierend eingestellt ist.

**4.** Steuervorrichtung (5) für ein Automatikgetriebe nach Anspruch 3, wobei die Absenkung des Drehmomentreduzierungssignals (Str) steil ist, wenn die Eingangswellendrehzahl (Nin) hoch oder die Fahrzeuggeschwindigkeit (V) niedrig ist, und die Absenkung des Drehmomentreduzierungssignals (Str) sanft ist, wenn die Eingangswellendrehzahl (Nin) niedrig oder die Fahrzeuggeschwindigkeit (V) hoch ist.

**5.** Steuervorrichtung (5) für ein Automatikgetriebe nach Anspruch 3 oder 4, wobei die Absenkung des Drehmomentreduzierungssignals (Str) auf der Grundlage des gegenwärtigen Getriebeschaltverhältnisses, des Soll- Getriebeschaltverhältnisses nach der Getriebeschaltung, eines vom Fahrer angeforderten Drehmoments auf der Grundlage der Beschleunigeröffnung und einer Zeit, die erforderlich ist, um die Fahrzeugantriebskraft auf die Fahrzeugantriebskraft nach der Getriebeschaltung zu reduzieren, berechnet wird.

**6.** Steuervorrichtung (5) für ein Automatikgetriebe nach einem der Ansprüche 1 bis 5, wobei die Fahrzeugantriebskraft die Fahrzeugantriebskraft nach der Getriebeschaltung erreicht, bevor die Hälfte einer Zeit vom Beginn eines Getriebeschaltvorgangs bis zur Beendigung der Getriebeschaltung verstrichen ist.

**Revendications**

1. Dispositif de commande (5) destiné à une transmission automatique capable d'exécuter un mode manuel de afin d'effectuer un changement de vitesse de manière progressive sur un mécanisme de transmission variable en continu (41) variable en continu tout en reliant par entraînement une source d'entraînement (2) à une roue (75a, 75b) en recevant un signal de changement de vitesse (Ss) et capable de délivrer un signal de réduction de couple (Str) afin de réduire un couple d'entraînement de la source d'entraînement (2) pendant un changement de vitesse, dans lequel, lorsque le signal de changement de vitesse (Ss) destiné à un passage à un rapport supérieur est délivré avec une ouverture d'accélérateur égale ou supérieure à un seuil et un changement de vitesse est effectué, le signal de réduction de couple (Str) destiné à réduire le couple d'entraînement de la source d'entraînement (2) est fourni de sorte qu'un couple inertiel agissant sur un arbre d'entrée du mécanisme de transmission variable en continu (41) soit annulé pendant qu'un rapport de changement de vitesse est modifié, et **caractérisé en ce que**, avant que le changement de vitesse se termine, une force d'entraînement de véhicule est réduite à une force d'entraînement du véhicule après le changement de vitesse.

2. Dispositif de commande (5) destiné à une transmission automatique selon la revendication 1, dans lequel le signal de réduction de couple (Str) entre le moment auquel la force d'entraînement du véhicule est réduite à la force d'entraînement de véhicule après le changement de vitesse et le moment auquel le changement de vitesse se termine est obtenu en ajoutant une quantité de réduction de couple destinée à annuler le couple inertiel agissant sur l'arbre d'entrée du mécanisme de transmission variable en continu (41) à une quantité de réduction de couple définie de façon à maintenir la force d'entraînement de véhicule à la force d'entraînement de véhicule après le changement de vitesse sur la base d'un rapport de changement de vitesse cible du mécanisme de transmission variable et d'un rapport de changement de vitesse actuel.

3. Dispositif de commande (5) destiné à une transmission automatique selon la revendication 1 ou 2, dans lequel le signal de réduction de couple (Str) lorsque la force d'entraînement de véhicule est réduite à la force d'entraînement de véhicule après le changement de vitesse est obtenu en ajoutant la quantité de réduction de couple destinée à annuler le couple inertiel agissant sur l'arbre d'entrée (41a) du mécanisme de transmission variable en continu (41) à une quantité de réduction de couple d'une pente descendante sur la base d'une vitesse de rotation d'arbre d'entrée du mécanisme de transmission variable en continu (41) et d'une vitesse du véhicule (V).

4. Dispositif de commande (5) destiné à une transmission automatique selon la revendication 3, dans lequel la pente descendante du signal de réduction de couple (Str) est raide lorsque la vitesse de rotation de l'arbre d'entrée (Nin) est élevée ou lorsque la vitesse du véhicule (V) est faible, et la pente descendante du signal de réduction de couple (Str) est légère lorsque la vitesse de rotation de l'arbre d'entrée (Nin) est faible ou la vitesse du véhicule (V) est élevée.

5. Dispositif de commande (5) destiné à une transmission automatique selon la revendication 3 ou 4, dans lequel la pente descendante du signal de réduction de couple (Str) est calculée sur la base du rapport de changement de vitesse actuel, du rapport de changement de vitesse cible après le changement de vitesse, d'un couple demandé par le conducteur sur la base de l'ouverture de l'accélérateur, et d'une durée nécessaire pour réduire la force d'entraînement du véhicule jusqu'à la force d'entraînement du véhicule après le changement de vitesse.

6. Dispositif de commande (5) destiné à une transmission automatique selon l'une quelconque des revendications 1 à 5, dans lequel la force d'entraînement du véhicule atteint la force d'entraînement du véhicule après le changement de vitesse avant que la moitié de la durée comprise entre le lancement de l'opération de changement de vitesse et la fin du changement de vitesse se soit écoulée.

## FIG. 1

# FIG. 2

# FIG. 3

```
        ┌─────────────┐
        │   START     │
        └─────────────┘
               │
               ▼
   ┌────────────────────────┐
   │ PERFORM UPSHIFT OPERATION │──── S1
   └────────────────────────┘
               │
               ▼
   ┌────────────────────────┐
   │ DETERMINE EXECUTION OF │──── S2
   │   TRANSMISSION SHIFT   │
   └────────────────────────┘
               │
               ▼
   ┌────────────────────────┐
   │ START TRANSMISSION SHIFT │──── S3
   └────────────────────────┘
               │
               ▼
   ┌────────────────────────┐
   │  START CONTROL OF VEHICLE │──── S4
   │    DRIVING FORCE       │
   └────────────────────────┘
               │
               ▼
         ◇ JERKTIME HAS ◇ ──── YES
         ◇  ELAPSED?   ◇          S5
               │ NO
```

S6 — CALCULATE ΔT BASED ON TARGET TRANSMISSION SHIFT RATIO AND CURRENT TRANSMISSION SHIFT RATIO

S7 — CALCULATE ΔTSWP BASED ON ΔT AND JERKTIME

S8 — ADD ΔTSWP TO ΔT(i - 1)

S9 — OUTPUT TORQUE REDUCTION SIGNAL OF DRIVING TORQUE REDUCTION AMOUNT

S10 — CALCULATE ΔT BASED ON TARGET TRANSMISSION SHIFT RATIO AND CURRENT TRANSMISSION SHIFT RATIO

S11 — OUTPUT TORQUE REDUCTION SIGNAL OF DRIVING TORQUE REDUCTION AMOUNT

S12 — ◇ TRANSMISSION SHIFT END CONDITION IS MET? ◇ — NO / YES

END

EP 3 078 558 B1

# FIG. 4

TRANS-MISSION SHIFT OPERATION | DETERMINATION OF TRANSMISSION SHIFT | START OF TRANSMISSION SHIFT | END OF TRANSMISSION SHIFT

TRANSMISSION SHIFT RATIO

TRANSMISSION SHIFT TIME PERIOD T0

RATIO — RATIO1, RATIO2

INPUT SHAFT ROTATION SPEED Nin

DRIVING TORQUE (FOR INERTIA) — Trq1, Trq2

DRIVING TORQUE (FOR CHANGE IN VEHICLE DRIVING FORCE) — Trq1, $\Delta T(i)$, $\Delta T$, $\Delta TSWP$

CHANGE TIME PERIOD JERKTIME

VEHICLE DRIVING FORCE FDV — FDV1, FDV2

t1   t2   t3   t4   t5

16

**EP 3 078 558 B1**

## REFERENCES CITED IN THE DESCRIPTION

### Patent documents cited in the description

- JP 2012026363 B
- JP 2005132329 A